(19) Europäisches Patentamt
European Patent Office
Office européen des brevets

(11) EP 2 933 288 A1

(12) EUROPEAN PATENT APPLICATION
published in accordance with Art. 153(4) EPC

(43) Date of publication:
**21.10.2015 Bulletin 2015/43**

(21) Application number: **13864343.2**

(22) Date of filing: **09.12.2013**

(51) Int Cl.:
***C08J 9/26*** *(2006.01)* ***C08J 9/14*** *(2006.01)*
***C08K 5/17*** *(2006.01)* ***C08L 79/08*** *(2006.01)*

(86) International application number:
**PCT/JP2013/082981**

(87) International publication number:
**WO 2014/097919 (26.06.2014 Gazette 2014/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **17.12.2012 JP 2012274840**

(71) Applicant: **Nitto Denko Corporation**
**Ibaraki-shi, Osaka 567-8680 (JP)**

(72) Inventors:
- **YAKUWA, Shinpei**
**Ibaraki-shi**
**Osaka 567-8680 (JP)**
- **TAKEKAWA, Yumi**
**Ibaraki-shi**
**Osaka 567-8680 (JP)**
- **KASAGI, Tomoyuki**
**Ibaraki-shi**
**Osaka 567-8680 (JP)**
- **IKENAGA, Hiroko**
**Ibaraki-shi**
**Osaka 567-8680 (JP)**

(74) Representative: **Sajda, Wolf E.**
**Meissner, Bolte & Partner GbR**
**Postfach 86 06 24**
**81633 München (DE)**

# (54) POLYETHERIMIDE POROUS BODY AND METHOD FOR PRODUCING SAME

(57) Provided are: a polyetherimide porous body which has a fine cell structure, a low relative permittivity and a high insulation breakdown voltage; and a method for producing the same. This polyetherimide porous body comprises a crosslinked body in which a polyetherimide having a specific repeated structural unit is ring-opened and crosslinked with a polyamine compound.

EP 2 933 288 A1

## Description

### TECHNICAL FIELD

The present invention relates to a polyetherimide porous body which has fine cells, and is low in relative permittivity and excellent in heat resistance; and a method for producing the porous body. The polyetherimide porous body of the invention is useful for, for example, an electrically insulating sheet integrated into, for example, a motor for automobiles or industries that involves inverter control.

### BACKGROUND ART

A plastic film has a high electrical insulating property, so that the film has been hitherto used in components or members for which reliability is required, for example, electrical appliances or electronic components such as circuit boards or motors.

With a reduction in the size of electronic and electrical appliances, and a rise in the performance thereof, motors for automobiles or industries that have widely been used recently are motors having a structure that can be inverter-controlled at a high voltage.

However, a high surge voltage generated from the inverter produces an effect on the motors. Thus, their insulator has been required to have high reliability.

An example of measures against a surge voltage is, besides an improvement in the reliability of electrical insulating property, an intentional reduction in the relative permittivity of the insulator.

In general, the relative permittivity of plastic materials is determined in accordance with their molecular skeleton. Thus, as an attempt for reducing the relative permittivity, a method of modifying the molecular skeleton is supposable. However, even if the molecular skeleton is modified, a limit is imposed on the reduction in the relative permittivity.

As other attempts for reducing the relative permittivity, suggested various methods have been suggested of using the relative permittivity "1" of air, making a plastic material porous, and controlling the relative permittivity of the porous material in accordance with the porosity of the material.

Conventional ordinary methods for producing a porous body are classified into a wet method, a dry method and others. The dry method is classified into a physical method and a chemical method.

A physical method is generally a method of dispersing a low-boiling-point liquid (foaming agent), such as a chlorofluorocarbon or hydrocarbon liquid, in a polymer, and then heating the liquid-dispersed polymer, thereby volatilizing the foaming agent to form cells.

A chemical method is a method of adding a foaming agent to a polymer, thermally decomposing the foaming agent to generate a gas, and forming cells by effect of the generated gas to yield a porous body.

Furthermore, in recent years, for a porous body small in cell diameter and high in cell density, a method has been suggested which includes dissolving a gas, such as nitrogen or carbon dioxide, in a polymer under high pressure, releasing the pressure, and then heating the gas to a temperature around the glass transition temperature or softening point of the polymer to form cells. Such a foaming method is a method of producing nuclei from a thermodynamically unstable state, and expanding and growing the nuclei to form cells. The method has an advantage of yielding a porous body having unprecedented fine pores.

For example, Patent Document 1 suggests a method of applying the foaming method to a polyetherimide to produce a foam small in density and large in mechanical strength.

Moreover, for example, Patent Document 2 suggests that the foaming method is applied to a styrene-based resin having a syndiotactic structure to yield a foam having a cell size of 0.1 $\mu$m to 20 $\mu$m, and this foam is used as an insulator for an electrical circuit board.

Furthermore, for example, Patent Document 3 suggests a low-dielectric-constant plastic insulating film which includes a porous plastic material having a porosity of 10 % by volume or more, and has a heat-resistant temperature of 100 °C or higher and a dielectric constant of 2.5 or less.

Additionally, for example, Patent Document 4 suggests a method for producing a porous body that is characterized in that, from a polymer solution having a microphase-separated structure in which discontinuous phases having an average diameter less than 10 $\mu$m are dispersed in a polymeric continuous phase, a component constituting the discontinuous phases is removed by at least one operation selected from evaporation and decomposition, and an extracting operation, thereby making the polymer porous.

However, in the drying-induced microphase separating method, cells in the porous body may not be made sufficiently small depending on the drying conditions, the membrane thickness, and other production conditions. Thus, a problem is caused that a porous body high in insulation breakdown voltage is not easily obtained.

PRIOR ART DOCUMENTS

PATENT DOCUMENTS

Patent Document 1: JP-A-6-322 168
Patent Document 2: JP-A-10-045 936
Patent Document 3: JP-A-9-100 363
Patent Document 4: JP-A-2001-081 225

SUMMARY OF THE INVENTION

PROBLEMS TO BE SOLVED BY THE INVENTION

In light of the above-mentioned problem, the present invention has been made. An object thereof is to provide a polyetherimide porous body which has a fine cell structure, and is low in relative permittivity and excellent in heat resistance; and a method for producing the porous body.

MEANS FOR SOLVING THE PROBLEMS

The invention is related to a polyetherimide porous body (hereinafter, simply referred to as "porous body"), comprising a crosslinked body wherein a polyetherimide having a repeating structural unit represented by the following Formula 1 is ring-opened and crosslinked with a polyamine compound:

Formula 1

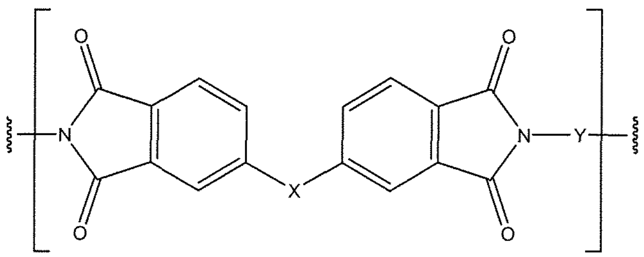

wherein X comprises at least one of chemical structures represented by Formulae 2, respectively, and Y comprises at least one of chemical structures represented by Formulae 3, respectively, provided that each of benzene rings in the respective chemical structures represented by the Formulae 2 and 3 may have a substituent:

Formulae 2

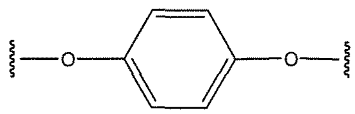

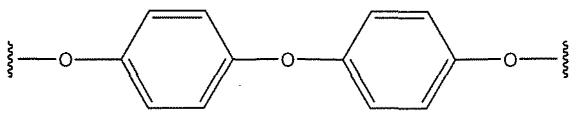

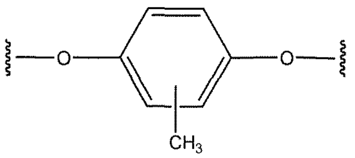

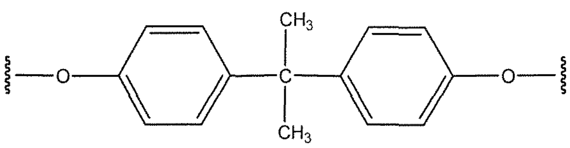

Formulae 3

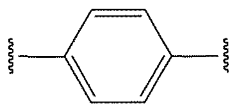
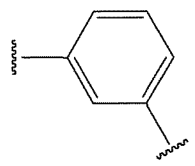
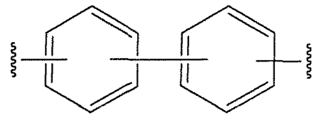
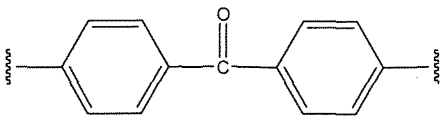
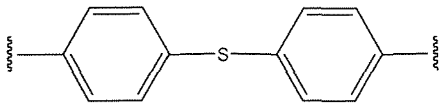
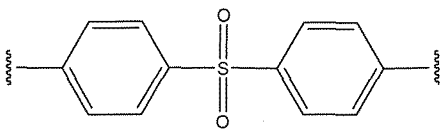
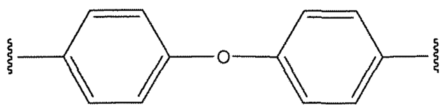

The inventors have found out that when a porous body is formed using a crosslinked body in which the polyetherimide is ring-opened and crosslinked with a polyamine compound, the resultant porous body can be made to have fine cells, and thus is low in relative permittivity and high in insulation breakdown voltage.

The polyamine compound is preferably a diamine compound, and is in particular preferably at least one diamine compound selected from the group consisting of aliphatic diamines, alicyclic diamines, and siloxanediamines.

These diamine compounds are high in basicity and high in reactivity with an imide group to be each preferably usable as a crosslinking agent. The use of these diamine compounds also promotes a decrease in the diameter of fine cells in the porous body.

The porous body preferably has an average cell diameter of 0.1 μm to 10 μm, and has an insulation breakdown voltage of 30 kV/mm or more. If the average cell diameter is less than 0.1 μm, the porous body is heightened in rigidity and is not easily bent. Even if bent, the porous body returns easily into the original shape after the removal of the external force.

There is therefore generated a tendency that the attachment of the porous body (electrically insulating sheet) to a motor or any other becomes difficult, or the precision of the attachment is lowered.

Conversely, if the average cell diameter is more than 10 μm, there is generated a tendency that the porous body is not easily made low in relative permittivity, or is lowered in mechanical strength.

If the insulation breakdown voltage is 30 kV/mm or more, the porous body can be effectively prevented, when used as an electrically insulating sheet for a motor or some other, from undergoing dielectric breakdown by a surge voltage.

The porous body preferably has a gel fraction of 10 % or more. If the gel fraction is less than 10 %, the porous body is lowered in cracking resistance to be easily cracked when subjected to bending work. Thus, the porous body tends to be lowered in insulation breakdown voltage.

The porous body of the present invention is suitably usable for an electrically insulating sheet for a motor.

Also, the present invention relates to an electrically insulating laminated sheet for a motor, which has a sheet member over at least one surface of the polyetherimide porous body.

Further, the present invention relates to a method for producing a polyetherimide porous body, comprising the steps of:

applying, over a substrate, a polymer solution comprising the polyetherimide having the repeating structural unit represented by the Formula 1, a phase-separating agent that is phase-separable from the polyetherimide, and a polyamine compound, and drying the applied solution to produce a phase-separated structure having a microphase-separated structure; and

removing the phase-separating agent from the phase-separated structure to produce the porous body.

## EFFECT OF THE INVENTION

The porous body of the present invention is formed of a crosslinked body in which a polyetherimide is ring-opened and crosslinked with a polyamine compound, and has a fine cell structure. The porous body therefore has features of being high in insulation breakdown voltage, excellent in heat resistance and electrical insulating property, and further low in relative permittivity.

For this reason, the porous body of the present invention is suitably usable for an electrically insulating sheet

integrated into, for example, a motor for automobiles or industries that involves inverter control.

MODE FOR CARRYING OUT THE INVENTION

The polymer used as the raw material of the porous body of the present invention, that is, the polymer constituting the continuous phase of the microphase-separated structure is mainly a crosslinked body in which a polyetherimide having a repeating structural unit represented by the following Formula 1 is ring-opened and crosslinked with a polyamine compound.

The polyetherimide contains, in the molecule thereof, plural aromatic rings so that the porous body can be remarkably improved in strength. About the polyetherimide based on the Formula 1, only one species thereof is usable, or two or more species thereof are together usable.

Formula 1

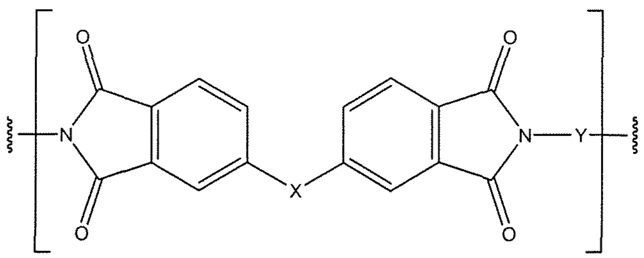

(In Formula 1, X comprises at least one of chemical structures represented by Formulae 2, respectively, and Y comprises at least one of chemical structures represented by Formulae 3, respectively, provided that each of benzene rings in the respective chemical structures represented by the Formulae 2 and 3 may have a substituent.)

Formulae 2

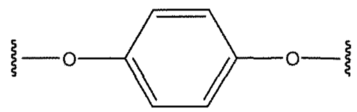

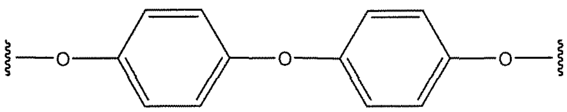

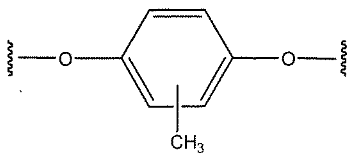

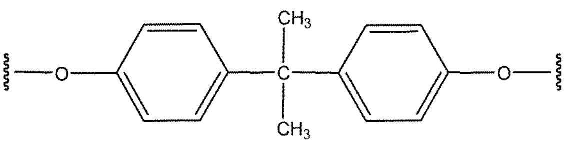

Formulae 3

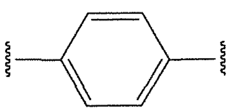

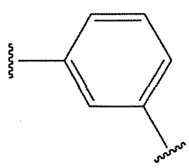

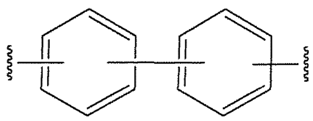

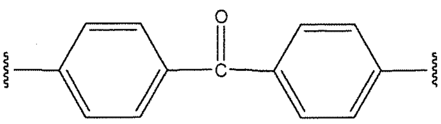

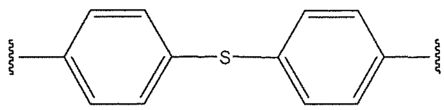

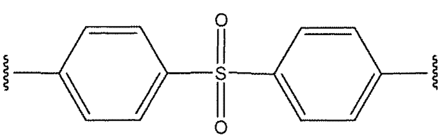

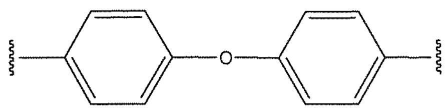

Examples of the substituent in the benzene ring include halogen groups, and saturated or unsaturated hydrocarbon groups which each have 1 to 20 carbon atoms (and may contain one or more heteroatoms and/or halogen atoms).

X is preferably the following out of the Formulae 2.

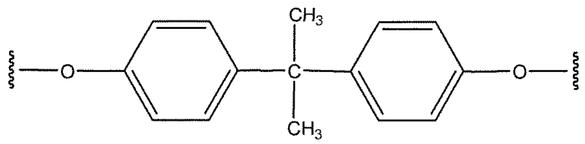

Y is preferably the following out of the Formulae 3.

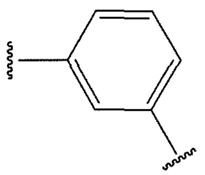

OR

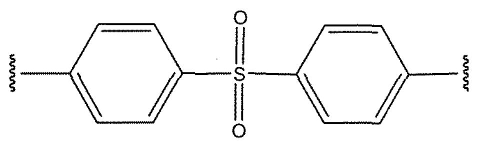

The use of the polyetherimide having the functional groups X and Y makes an improvement of the porous body in dimension stability at high temperature.

The number-average molecular weight of the polyetherimide of the Formula 1 is not particularly limited, and is usually from about 5000 to 50000.

The polyetherimide can be synthesized by a known method. Examples of a commercially available product of the polyetherimide include trade names "Ultem 1000-1000" and "UltemXH-6050," manufactured by SABIC Innovative Plastics.

As far as the object of the present invention is not impaired, for example, the following may be together used as raw materials of the porous body: polyamide, polycarbonate, polybutylene terephthalate, polyethylene terephthalate, polyphenylene sulfide, polysulfone, polyethersulfone, polyetheretherketone, polyamideimide and polyimide.

The polyamine compound is usable without being especially limited as far as it is a compound through which imide groups of the polyetherimide are ring-opened to form intermolecular crosslinkages of the polymer.

Examples of the polyamine compound include aliphatic polyamines such as iminobispropylamine, bis(hexamethylene)triamine, 1,3,6-trisaminomethylhexane, polymethylenediamine, trimethylhexamethylenediamine, polyetherdiamine, and 1,3-bis(3-aminopropyl)tetramethyldisiloxane; alicyclic polyamines such as isophoronediamine, menthanediamine, N-aminoethylpiperazine,3,9-bis(3-aminopropyl)-2,4,8,10-tetraoxaspiro(5,5)undeca ne adduct, bis(4-amino-3-methylcyclohexyl)methane, and bis(4-aminocyclohexyl)methane; and amino-modified silicones. These may be used alone or in the form of a mixture of two or more thereof.

The polyamine compound is preferably a diamine compound, and is more preferably at least one selected from the group consisting of aliphatic diamines, alicyclic diamines, and siloxanediamines. The polyamine compound is in particular preferably an aliphatic diamine, which is high in basicity. These diamine compounds may each contain, in the molecule thereof, an aromatic ring or a heteroatom.

The aliphatic diamines are, for example, compounds represented by the following Formula 4:

<u>Formula 4</u>

$$H_2N-\left[CH_2\right]_n-NH_2$$

wherein n is usually an integer of 1 to 50. If n is too small, the diamines are low in reactivity. If n is too large, the addition amount of any one of the diamines becomes large. Thus, n is preferably an integer of 4 to 30, more preferably an integer of 6 to 20.

The alicyclic diamines are, for example, compounds represented by the following Formulae 5:

Formulae 5

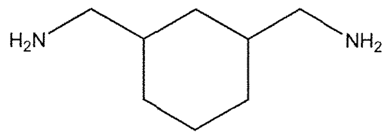

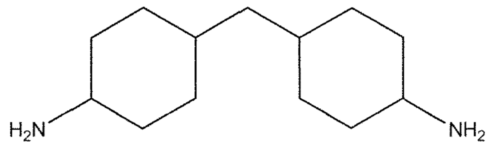

The siloxanediamines are, for example, compounds represented by the following Formulae 6 or Formula 7:

Formulae 6

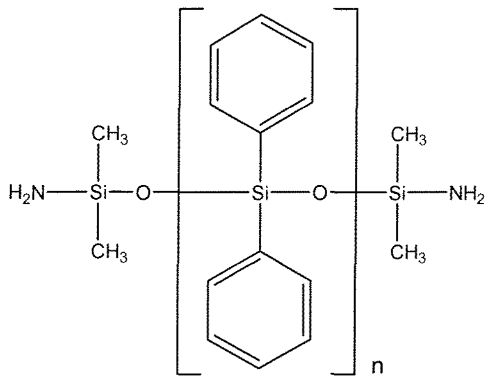

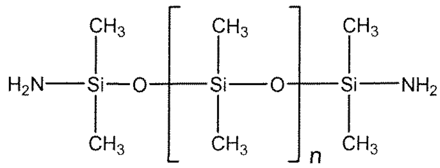

wherein n is usually an integer of 1 to 50. If n is too small, the diamines are low in reactivity. If n is too large, the addition amount of any one of the diamines becomes large. Thus, n is preferably an integer of 4 to 30, more preferably an integer of 6 to 20.

Formula 7

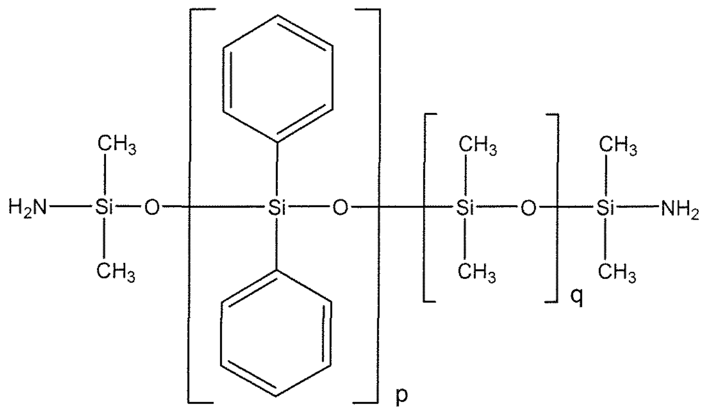

wherein p and q are usually each an integer of 1 to 25. If p and q are each too small, the diamines are low in reactivity. If p and q are each too large, the addition amount of any one of the diamines becomes large. Thus, p and q are each preferably an integer of 1 to 15, more preferably an integer of 2 to 10. The ratio of p to q is as follows: p/q = about 1/9 to about 5/5, preferably 2/8 to 4/6.

The addition amount of the polyamine compound is preferably an amount permitting the molar equivalent of its amino groups to be from 0.001 to 2 per molar equivalent of the imide groups, more preferably an amount permitting that of the amino groups to be from 0.005 to 0.5 per molar equivalent of the imide groups.

If the molar equivalent of the amino groups is less than 0.001, the ring-opening reaction of the imide groups does not advance sufficiently to tend not to yield the target polyetherimide crosslinked body easily. Conversely, if the molar equivalent of the amino groups is more than 2, at the time of mixing the raw materials together, the mixture is gelated so that the mixture is not easily made into a film form.

The chemical structure of the crosslinked body obtained by ring-opening and crosslinking the polyetherimide with the diamine compound is, for example, a chemical structure represented by the following Formula 8:

Formula 8

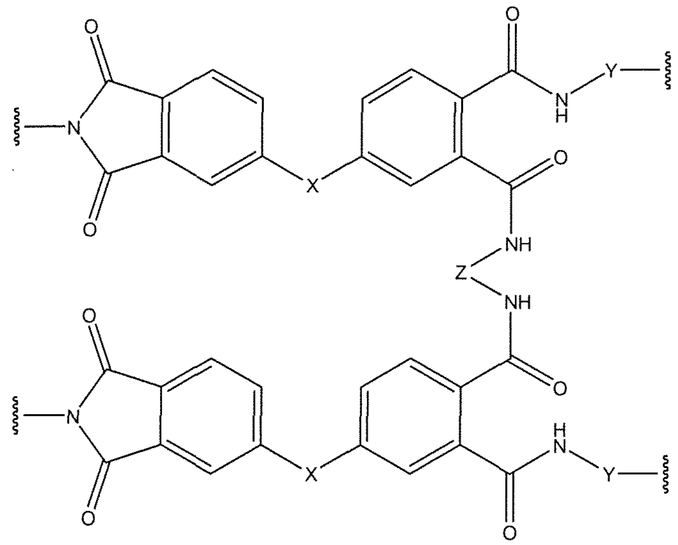

wherein Z is a residue of the diamine compound.

The phase-separating agent is not particularly limited as far as the agent is a component which constitutes the discontinuous phase of the microphase-separated structure, and which can form the microphase-separated structure when the above-mentioned polymer is mixed with this agent and be extracted with an extracting solvent.

Examples of the phase-separating agent include, for example, polyalkylene glycols such as polyethylene glycol and polypropylene glycol; those polyalkylene glycols terminated at one or each end by methyl or terminated at one or each end by (meth)acrylate; urethane prepolymers; and (meth)acrylate- based compounds such as phenoxypolyethylene glycol (meth)acrylate, ε-caprolactone (meth)acrylate, trimethylolpropane tri(meth)acrylate, dipentaerythritol hexa(meth)acrylate, urethane (meth)acrylates, epoxy (meth)acrylates, and oligoester (meth)acrylates. These phase-separating agents can be used alone or in combination of two or more thereof.

The molecular weight of the phase-separating agent is not particularly limited. The weight-average molecular weight thereof is preferably 10000 or less (for example, about 100 to 10000), more preferably from 100 to 2000 since an operation of extracting and removing the agent is easy. If the weight-average molecular weight is less than 100, the agent does not undergo phase-separation easily from the cured body of the polymer.

Conversely, if the weight-average molecular weight is more than 10000, the microphase-separated structure becomes too large or the extraction and removal of the phase-separating agent from the phase-separated structure is difficult. In many cases, an oligomer is used as the phase-separating agent.

The addition amount of the phase-separating agent may be appropriately selected in accordance with a combination of the phase-separating agent with the above-mentioned polymer. In order to produce a porous body having an average cell diameter of 0.1 μm to 10 μm and a volume porosity of 20 % to 90 %, the phase-separating agent is preferably used in an amount from 20 to 300 parts by weight, more preferably from 30 to 100 parts by weight for 100 parts by weight of the polymer.

A polymer solution is prepared by mixing the polymer, the phase-separating agent and a solvent together. The solvent is, for example, an amide such as N-methyl-2-pyrrolidone, N,N-dimethylacetamide, or N,N-dimethylformamide. The use amount of the solvent is from about 150 to 2000 parts by weight, preferably from 150 to 400 parts by weight, more preferably from 300 to 350 parts by weight for 100 parts by weight of the polymer.

An additive other than the phase-separating agent may be added to the polymer solution. Examples of the additive include a tackifier resin, a flame retardant, an antioxidant, an inorganic filler, a bubble nucleating agent, a crystal nucleating agent, a thermal stabilizer, an optical stabilizer, an ultraviolet absorber, a plasticizer, a lubricant, a pigment, a crosslinking agent, a crosslinking aid, and a silane coupling agent.

In the method of the present invention for producing a porous body, the polymer solution is initially applied onto a substrate, and the applied solution is dried to produce a phase-separated structure (in the form of, for example, a sheet or film) having a microphase-separated structure.

The substrate is not particularly limited as long as it has a smooth surface. A continuous applying method includes, for example, a wire bar method, a kiss coating method, and a gravure method. The method of applying in a batch system includes, for example, an applicator method, a wire bar method, and a knife coater method.

The polymer solution applied onto the substrate is dried to vaporize the solvent to yield a phase-separated structure in which the phase-separating agent is microphase-separated. The temperature at which the solvent is vaporized

(dried) is not particularly limited. It is advisable to adjust the temperature appropriately in accordance with the used solvent species.

The temperature is usually from 60 °C to 200 °C. The microphase-separated structure is usually a sea-island structure in which the polymer and the phase-separating agent are in a sea form and in an island form, respectively.

The ring-opening and crosslinking reaction between the polyetherimide and the polyamine compound advances in the solvent-vaporizing step. It is therefore unnecessary to conduct any especial treatment for conducting the ring-opening and crosslinking reaction after the vaporization of the solvent.

Next, the porous body is prepared by removing the phase-separating agent that was microphase-separated from the phase-separated structure. In addition, the phase-separated structure may be previously peeled off from the substrate before removing the phase-separating agent.

The method to remove the phase-separating agent from the phase-separated structure is not particularly limited, but includes preferably a method of extracting the phase-separating agent with a solvent. It is necessary to use a solvent that is a good solvent for the phase-separating agent and does not dissolve the polymer, and includes, for example, water, organic solvents (e.g., toluene, ethanol, ethyl acetate, and heptane), carbon dioxide fluid (e.g., liquefied carbon dioxide, subcritical carbon dioxide, and supercritical carbon dioxide).

The carbon dioxide fluid can remove the phase-separating agent efficiently because they can easily penetrate into the phase-separated structure. The extraction may be attained by using water or the organic solvent together with the carbon dioxide fluid.

In the case of using the carbon dioxide fluid as an extraction solvent, a pressure vessel is usually used. The pressure vessel that can be use includes, for example, a batch type pressure vessel and a pressure vessel provided with a pressure-resistant device for feeding and winding a sheet. The pressure vessel is usually provided with a carbon dioxide fluid supply means constituted by pump, piping, valve and the like.

The extraction of the phase-separating agent may be carried out by feeding/discharging continuously carbon dioxide fluid into/from a pressure vessel in which the phase-separated structure is placed, or may be carried out in a pressure vessel in a closed system (in a state where the charged phase-separated structure and carbon dioxide fluid do not move to the outside of the vessel).

In the case of using supercritical carbon dioxide and subcritical carbon dioxide, swelling of the phase-separated structure is promoted and diffusion coefficient of the insolubilized phase-separating agent is improved, resulting in efficient removal of the phase-separating agent from the phase-separated structure.

In the case of using liquefied carbon dioxide, the diffusion coefficient decreases, but the phase-separating agent is efficiently removed from the phase-separated structure because of improved permeability of the liquefied carbon dioxide to the phase-separated structure.

It is sufficient for the temperature and the pressure when the phase-separating agent is extracted with the carbon dioxide fluid to permit carbon dioxide to be made into each of the states (liquid, subcritical or supercritical state). The temperature and the pressure are usually from 20 °C to 230 °C, and from 7.3 MPa to 100 MPa, respectively, preferably from 25 °C to 200 °C, and from 10 MPa to 50 MPa, respectively.

It is necessary to appropriately adjust the extraction time, depending on the temperature and pressure during extraction, the added amount of the phase-separating agent, and the thickness of the phase-separated structure, but the extraction time is usually 1 to 15 hours, preferably 2 to 15 hours.

The extraction method using water or organic solvent includes, for example, a method of immersing the phase-separated structure in water or organic solvent, a method of spraying water or organic solvent to the phase-separated structure, and the like.

From the viewpoint of removal efficiency of the phase-separating agent, such an immersing method is preferred. In addition, the phase-separating agent can be removed efficiently by replacing water or organic solvent over a few times or performing the extraction with stirring.

After the production of the porous body by the extraction and removal of the phase-separating agent, the porous body may be subjected to drying treatment and others.

The porous body of the present invention preferably has an average cell diameter of 0.1 μm to 10 μm, more preferably 0.1 μm to 5 μm, even more preferably 0.1 μm to 3 μm.

The volume porosity of the porous body of the present invention is preferably 20 % to 90 %, more preferably 30 % to 80 %, even more preferably 35 % to 70 %. If the volume porosity is less than 20 %, the porous body is increased in its rigidity not to be easily bent, or even when bent, to be easily returned into the original form by removing external force therefor. A tendency is therefore generated that the porous body (electrically insulating sheet) is not easily fitted to a motor or some other, or the precision of the fitting is lowered. Moreover, the porous body is not easily lowered in relative permittivity. Conversely, if the volume porosity is more than 90 %, the porous body tends to be lowered in mechanical strength.

The insulation breakdown voltage of the porous body of the present invention is preferably 30 kV/mm or more, more preferably 40 kV/mm or more. The upper limit of the insulation breakdown voltage is usually about 200 kV/mm.

The gel fraction of the porous body of the present invention is preferably 10 % or more, more preferably 30 % or more, even more preferably 40 % or more.

The relative permittivity of the porous body of the present invention is about 1.4 to 2.5, preferably 1.4 to 1.8.

The form of the porous body may be appropriately varied in accordance with the usage thereof. When the form is a sheet or film form, the thickness is usually 1 μm to 500 μm, preferably 10 μm to 250 μm, more preferably 30 μm to 200 μm.

The porous body of the present invention is suitably usable for an electrically insulating sheet for a motor.

The electrically insulating laminated sheet of the present invention for a motor is a sheet having a sheet member over at least one surface of the electrically insulating sheet for a motor, which is the porous body.

The form of the electrically insulating laminated sheet for a motor is not particularly limited, and may be a sheet or tape form. The electrically insulating laminated sheet may be punched out into a required form, or may be three-dimensionally bent.

By fitting the sheet member, the electrically insulating laminated sheet for a motor is improved in strength and lubricity.

Examples of the sheet member include a nonwoven fabric, paper and a film. In order to improve the electrically insulating laminated sheet in heat resistance, it is preferred to use a nonwoven fabric, paper, or a film having heat resistance.

The thickness of the sheet member is not particularly limited, and is usually 5 μm to 100 μm, preferably 5 μm to 50 μm. If the thickness of the sheet member is less than 5 μm, the sheet member does not easily give strength to the electrically insulating laminated sheet for a motor. If the thickness is more than 100 μm, the power of the motor is lowered by a decline in the winding number of its coil line, or the electrically insulating laminated sheet for a motor is not easily made low in relative permittivity.

## EXAMPLES

The present invention will be described below by way of Examples, without intending to limit the present invention thereto in any way.

### Measurement and Evaluation Method

### Average Cell Diameter

The porous body was cooled with liquid nitrogen, and was cut with a cutting tool perpendicularly to its sheet plane to prepare an evaluation sample. The cut surface of the sample was subjected to Pd-Pt vapor deposition treatment. The cut surface was observed with a scanning electron microscope (SEM) ("JSM-6510LV," manufactured by JEOL Ltd.). An image thereof was binarized with image processing software ("NanoHunter NS2K-Lt" manufactured by Nanosystem Corporation) to be separated into a cell region and a resin region.

The respective maximum horizontal string lengths of the cells were measured. About 40 cells that are cells from a cell having the largest cell diameter to a cell having the 40$^{th}$ largest cell diameter, the average value of the cell diameters was calculated out. The value was defined as the average cell diameter.

### Volume Porosity

The specific gravities of the porous body and non-porous body were measured respectively with an electronic gravimeter (MD-300S, manufactured by Alfa Mirage Co., Ltd.), and the volume porosity was calculated from the following equation:

$$\text{Volume porosity (\%)} = \{1 - (\text{Specific gravity of porous body})/(\text{Specific gravity of non-porous body})\} \times 100.$$

### Insulation Breakdown Voltage

By the method in accordance with the standard as defined in JIS C2110, the insulation breakdown voltage of the porous body was measured at a pressure rise rate of 1 kV/sec.

Gel Fraction

The porous body (0.5 g) was wrapped with a resin film (TEMISH NTF1133, manufactured by Nitto Denko Corporation), and the wrapped body was put in a container. Thereto was added about 50 mL of N-methyl-2-pyrrolidone as a solvent. This system was stirred with a stirrer for 24 hours. Thereafter, the solvent was wiped away from the resin film.
The porous body was heated and dried at 240 °C for 3 hours, and then the weight of the resultant gel body was measured. The gel fraction was calculated out in accordance with the following expression:

$$\text{Gel fraction (\%)} = (\text{Weight of the gel body}/\text{Weight of the porous body}) \times 100.$$

Relative Permittivity

The relative permittivity was determined by measuring a complex permittivity at a frequency of 1 GHz by the cavity resonator perturbation method and defining its real part as the relative permittivity. A strip-shaped sample (sample size: 2 mm x 70 mm length) was used for the measurement with a measurement equipment such as a cylindrical cavity resonator ("Network Analyzer N5230C", manufactured by Agilent Technologies, Inc.; "Cavity Resonator 1GHz", manufactured by Kanto Electronic Application and Development Inc.).

Example 1

To a 1000-mL four-necked flask was added 730 g of N-methyl-2-pyrrolidone (NMP), and this system was heated to 70 °C. Thereto were added 189 g of a polyetherimide (PEI) resin (Ultem 1000-1000, manufactured by SABIC Innovative Plastics) and 81 g of a PEI resin (UltemXH-6050, manufactured by SABIC Innovative Plastics). The resultant system was stirred for 5 hours to yield a PEI resin solution (I).
To the resultant PEI resin solution (I) were added polypropylene glycol having a weight-average molecular weight of 400 in an amount of 45 parts by weight for 100 parts by weight of the PEI resin, and 1,4-butanediamine in an amino group molar equivalent of 0.04 per molar equivalent of the imide groups of the PEI resin.
These components were stirred to yield a transparent homogenous PEI resin solution (II). In a comma direct manner, the PEI resin solution (II) was applied onto a PET film, and then the applied solution was dried at 130 °C for 8 minutes to vaporize and remove NMP. Thus, a phase-separated structure having a microphase-separated structure was produced.
The phase-separated structure was put in a 30-L pressure-resistant vessel, and then carbon dioxide was injected thereinto in an atmosphere of 35 °C. The inside thereof was pressurized to 30 MPa. While this pressure was kept, the vessel was kept as it was for 60 minutes. Thereafter, a carbon dioxide fluid was injected thereinto at a flow rate of about 90 kg/hour until the total use amount of the fluid became 180 kg, and then the fluid was discharged to make an operation of extracting the remaining solvent and polypropylene glycol.
Thereafter, while the atmosphere temperature was set to 85 °C to raise the temperature of the carbon dioxide fluid, 320 kg of a carbon dioxide fluid was further injected thereinto and discharged to conduct an extraction treatment. In this way, a PEI porous body was produced.

Example 2

A PEI porous body was produced in the same way as in Example 1 except that 1,6-hexanediamine was used instead of 1,4-butanediamine.

Example 3

A PEI porous body was produced in the same way as in Example 1 except that 1,10-decanediamine was used instead of 1,4-butanediamine.

Example 4

A PEI porous body was produced in the same way as in Example 1 except that a dimethylsiloxane having both terminals each modified with an amine (KF-8010, manufactured by Shin-Etsu Chemical Co., Ltd.) was added in an amino group molar equivalent of 0.02 per molar equivalent of the imide groups of the PEI resin instead of the addition of 1,4-butanediamine in the amino group molar equivalent of 0.04 per molar equivalent of the imide groups of the PEI resin.

Example 5

A PEI porous body was produced in the same way as in Example 1 except that a dimethylsiloxane having side chains partially substituted with phenyl groups and having both terminals each modified with an amine (X-22-9409, manufactured by Shin-Etsu Chemical Co., Ltd.) was added in an amino group molar equivalent of 0.02 per molar equivalent of the imide groups of the PEI resin instead of the addition of 1,4-butanediamine in the amino group molar equivalent of 0.04 per molar equivalent of the imide groups of the PEI resin.

Comparative Example 1

A PEI porous body was produced in the same way as in Example 1 except that 1,4-butanediamine was not added.

Table 1

| | Example 1 | Example 2 | Example 3 | Example 4 | Example 5 | Comparative Example 1 |
|---|---|---|---|---|---|---|
| Polyamine compound species | 1,4-butanediamine | 1,6-hexanediamine | 1,10-decanediamine | KF-8010 | X-22-9409 | - |
| Amino group molar equivalent (mol) per mole of imide groups | 0.04 | 0.04 | 0.04 | 0.02 | 0.02 | - |
| Polypropylene glycol (parts by weight) | 45 | 45 | 45 | 45 | 45 | 45 |
| | | | | | | |
| Porous body thickness (μm) | 231 | 276 | 207 | 185 | 189 | 185 |
| Average cell diameter (μm) | 5.5 | 5.8 | 0.24 | 1.7 | 1.7 | 8.8 |
| Volume porosity (%) | 58.3 | 58.3 | 54.3 | 50.1 | 49.3 | 43.8 |
| Insulation breakdown voltage (kV/mm) | 61.9 | 56.3 | 74.3 | 41.9 | 48.9 | 28.7 |
| Gel fraction (%) | 76 | 50 | 68 | 93 | 93 | 0 |
| Relative permittivity | 1.7 | 1.7 | 1.8 | 1.8 | 1.9 | 2.0 |

INDUSTRIAL APPLICABILITY

The porous body of the invention is useful for an electrically insulating sheet integrated into, for example, a motor for automobiles or industries that involves inverter control.

## Claims

1. A polyetherimide porous body, comprising a crosslinked body wherein a polyetherimide having a repeating structural unit represented by the following Formula 1 is ring-opened and crosslinked with a polyamine compound:

Formula 1

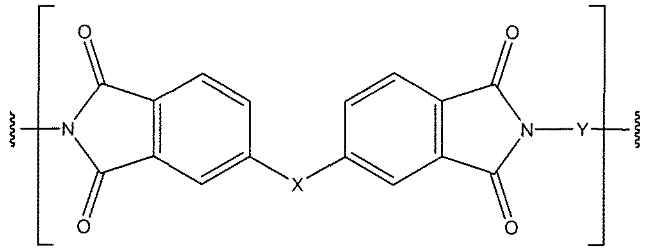

wherein X comprises at least one of chemical structures represented by Formulae 2, respectively, and Y comprises at least one of chemical structures represented by Formulae 3, respectively, provided that each of benzene rings in the respective chemical structures represented by the Formulae 2 and 3 may have a substituent:

Formulae 2

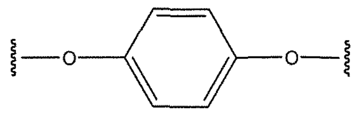

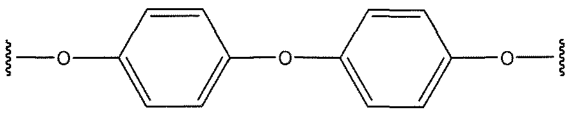

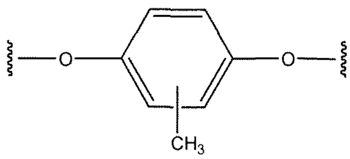

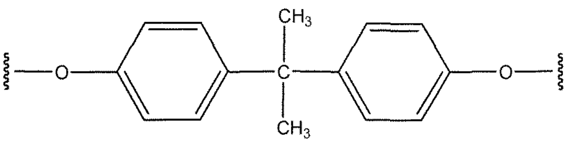

Formulae 3

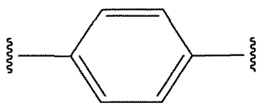
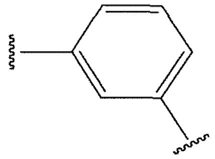
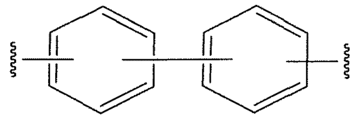
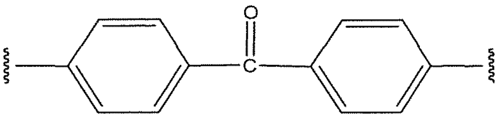
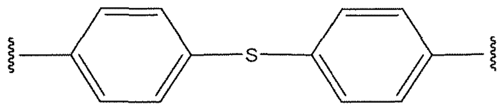
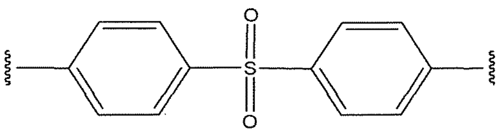
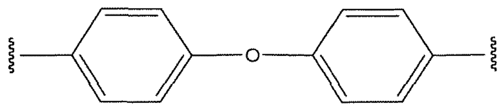

**2.** The polyetherimide porous body according to claim 1,
wherein the polyamine compound is a diamine compound.

**3.** The polyetherimide porous body according to claim 2,
wherein the diamine compound is at least one selected from the group consisting of aliphatic diamines, alicyclic diamines, and siloxanediamines.

**4.** The polyetherimide porous body according to any one of claims 1 to 3, which has an average cell diameter of 0.1 μm to 10 μm, and has an insulation breakdown voltage of 30 kV/mm or more.

**5.** The polyetherimide porous body according to any one of claims 1 to 4, which has a gel fraction of 10 % or more.

**6.** The polyetherimide porous body according to any one of claims 1 to 5, which is used as an electrically insulating sheet for a motor.

**7.** An electrically insulating laminated sheet for a motor, which has a sheet member over at least one surface of the polyetherimide porous body as recited in claim 6.

**8.** A method for producing a polyetherimide porous body according to any one of claims 1 to 6,
comprising the steps of:

- applying, over a substrate, a polymer solution comprising the polyetherimide having the repeating structural unit represented by the Formula 1, a phase-separating agent that is phase-separable from the polyetherimide, and a polyamine compound, and drying the applied solution to produce a phase-separated structure having a microphase-separated structure; and
- removing the phase-separating agent from the phase-separated structure to produce the porous body.

## INTERNATIONAL SEARCH REPORT

International application No.
PCT/JP2013/082981

A. CLASSIFICATION OF SUBJECT MATTER
*C08J9/26*(2006.01)i, *C08J9/14*(2006.01)i, *C08K5/17*(2006.01)i, *C08L79/08* (2006.01)i

According to International Patent Classification (IPC) or to both national classification and IPC

B. FIELDS SEARCHED

Minimum documentation searched (classification system followed by classification symbols)
C08J9/00-9/42, C08K5/17, C08L79/08

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2012-182116 A (Nitto Denko Corp.), 20 September 2012 (20.09.2012), entire text & US 2013/0309481 A1 & EP 2672614 A1 & WO 2012/105650 A1 | 1-8 |
| A | JP 2011-508017 A (Sabic Innovative Plastics I.P. B.V.), 10 March 2011 (10.03.2011), entire text & US 2009/0163610 A1 & EP 2254740 A1 & WO 2009/085688 A1 | 1-8 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 20 February, 2014 (20.02.14) | 04 March, 2014 (04.03.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2013/082981

C (Continuation). DOCUMENTS CONSIDERED TO BE RELEVANT

| Category* | Citation of document, with indication, where appropriate, of the relevant passages | Relevant to claim No. |
|---|---|---|
| A | JP 05-310931 A (Matsushita Electric Works, Ltd.), 22 November 1993 (22.11.1993), entire text & US 5401812 A | 1-8 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6322168 A
- JP 10045936 A
- JP 9100363 A
- JP 2001081225 A